# EUROPEAN PATENT APPLICATION

(11) **EP 4 838 345 A1**
(43) Date of publication of application: **11.11.2026**
(21) Application number: 24915652.2
(22) Date of filing: 19.04.2024
(51) Int. Cl.: G06F 3/04815, G06F 3/01

(54) **INFORMATION PROCESSING DEVICE, INFORMATION PROCESSING PROGRAM, AND INFORMATION PROCESSING METHOD**

(30) Priority: 05.01.2024 JP 2024000467
(71) Applicant: Sony Group Corporation, Tokyo 108-0075 (JP)
(72) Inventor: OHNO, Erika, Tokyo 108-0075 (JP); ISHII, Tomohiro, Tokyo 108-0075 (JP); TAKAHASHI, Kazuma, Tokyo 108-0075 (JP)
(74) Representative: D Young & Co LLP
(86) International application number: PCT/JP2024/015496
(87) International publication number: WO 2025/146728

(57) **Abstract**

According to the present disclosure, there is provided an information processing apparatus including a control unit configured to execute processes including: outputting, to a three-dimensional space, a display for irradiating a predetermined range based on a first position pointed by a controller; and changing a size of the display in accordance with a distance between the first position on the three-dimensional space and a second position of the controller.

## Description

### Field

The present disclosure relates to an information processing apparatus, an information processing program, and an information processing method.

### Background

With a head mounted display device, for example, a computer-aided design (CAD) model or an object such as an operation panel for performing various operations can be displayed in a three-dimensional space such as virtual reality (VR) or augmented reality (AR). As a result, an operator can perform design work in the three-dimensional space.

In order for an operator to perform various operations in the three-dimensional space, for example, a controller that is communicably connected to a head mounted display device is used. As a result, for example, the controller is displayed in the three-dimensional space, and the worker can perform various operations on the operation target object using the controller.

### Citation List

### Patent Literature

Patent Literature 1: JP 2020-181320 A
Patent Literature 2: WO 2019/220803 A

### Summary

### Technical Problem

However, in the three-dimensional space, there is a case where it is difficult to operate the controller such as a case where the controller and an object as an operation target are separated from each other. In particular, in a case where detailed work such as CAD is required, the degree of difficulty is also increased. Note that the work in CAD is an example, and the problem to be solved by the invention is for various operations in a three-dimensional space such as VR and AR.

Therefore, the present disclosure proposes an information processing apparatus, an information processing program, and an information processing method capable of more easily performing a user operation in a three-dimensional space such as VR or AR.

### Solution to Problem

An information processing apparatus according to one embodiment of the present disclosure includes a control unit configured to execute processes including: outputting, to a three-dimensional space, a display for irradiating a predetermined range based on a first position pointed by a controller; and changing a size of the display in accordance with a distance between the first position on the three-dimensional space and a second position of the controller.

### Brief Description of Drawings

FIG. 1 is a view illustrating a configuration example of an information processing system according to the present embodiment.
FIG. 2 is a view illustrating an example of a controller 200 according to the present embodiment.
FIG. 3 is a view illustrating a display example of each object in a three-dimensional space according to the present embodiment.
FIG. 4 is a view for describing an operation by a ray 220 in the three-dimensional space.
FIG. 5 is a view for describing an operation by a torch UI 230 according to the present embodiment.
FIG. 6 is a view illustrating a display example of the torch UI 230 in a case where approach to an object has occurred, according to the present embodiment.
FIG. 7 is a block diagram illustrating a functional configuration example of an information processing apparatus 100 according to the present embodiment.
FIG. 8 is a view illustrating a display example of the torch UI 230 for a three-dimensional object according to the present embodiment.
FIG. 9 is a view illustrating an example (1) of the operation by the torch UI 230 according to the present embodiment.
FIG. 10 is a view illustrating an example (2) of the operation by the torch UI 230 according to the present embodiment.
FIG. 11 is a view illustrating another example of the operation by the torch UI 230 according to the present embodiment.
FIG. 12 is a view for describing an operation panel according to the present embodiment.
FIG. 13 is a view illustrating an example of a torch UI according to a modification example.
FIG. 14 is a view illustrating an example (1) of an operation by the torch UI according to the modification example.
FIG. 15 is a view illustrating an example (2) of the operation by the torch UI according to the modification example.
FIG. 16 is a view for describing usage of a UI.
FIG. 17 is a view illustrating an example of display of the torch UI.
FIG. 18 is a view illustrating an example of display of an operation target.
FIG. 19 is a view illustrating an example of display for selecting a virtual object.
FIG. 20 is a view illustrating an example of a display form of the torch UI.
FIG. 21 is a view (1) illustrating a display example of the torch UI by input means other than the controller.
FIG. 22 is a view (2) illustrating a display example of the torch UI by the input means other than the controller.
FIG. 23 is a block diagram illustrating a hardware configuration example of the information processing apparatus 100 according to the present embodiment. Description of Embodiments

Hereinafter, the present embodiment will be described in detail with reference to the drawings. Note that, in the present specification and the drawings, substantially the same parts are denoted by the same reference signs, and repetitive description will be omitted.

Note that the description will be given in the following order.
1. Embodiment
2. Hardware Configuration Example
3. Summary

### <1. Embodiment>

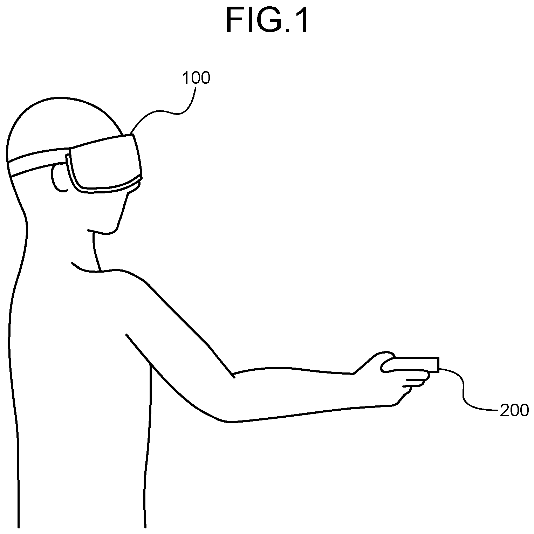

First, a configuration example of an information processing system according to the present embodiment will be described with reference to FIG. 1. FIG. 1 is a view illustrating the configuration example of the information processing system according to the present embodiment. As illustrated in FIG. 1, the information processing system according to the present embodiment includes, for example, an information processing apparatus 100 and a controller 200. The information processing apparatus 100 and the controller 200 are communicably connected to each other, for example, wirelessly or by wire.

The information processing apparatus 100 is, for example, a wearable display used by being worn on the head of a user in order to realize VR or AR. More specifically, the information processing apparatus 100 may be, for example, a head mounted display (HMD), AR glasses, or the like.

The information processing apparatus 100 includes, for example, a sealed type or transmissive type display unit (display). Note that the information processing apparatus 100 may be, for example, either an optical see-through type or a video see-through type. Furthermore, the information processing apparatus 100 displays, for example, a virtual space expressed by computer graphics (CG) or the like on a display (so-called VR display). Alternatively, for example, the information processing apparatus 100 superimposes and displays a virtual object expressed by CG or the like on the real space on the display (so-called AR display).

The controller 200 is a controller device for performing various operations such as moving a virtual object in a three-dimensional space such as VR or AR or operating a virtual operation panel by being operated by a user, for example. The controller 200 is, for example, a VR controller capable of inputting six degrees of freedom (6DoF) information. More specifically, the controller 200 includes sensors such as an inertial sensor, an acceleration sensor, a gravity sensor, or a biological sensor, and detects position and posture information of the own device. Then, the controller 200 transmits the detected position and gesture information of the own device to the information processing apparatus 100.

The controller 200 may include, for example, one or more types of input devices among a controller, a ring type input device, a pointing device, and a 6DoF (six degrees of freedom) input device.

The controller 200 is, for example, an input device gripped by the hand of the user. The controller 200 may include, for example, an operation unit such as a button that is operable by the user. For example, the user can perform a selection operation, a determination operation, a scroll operation, and the like on a virtual object displayed on the display of the information processing apparatus 100 by pressing the button of the controller 200. Furthermore, the controller 200 may include, for example, a touch sensor and a motion sensor.

The ring type device that is an example of the controller 200 is, for example, a finger ring-type input device worn on a finger of a user. The ring type device may include, for example, an operation member such as a button that is operable by a user. For example, the user can change the position and posture of a virtual object (for example, a three-dimensional model) in the three-dimensional space such as VR or AR by 6DoF (six degrees of freedom) by operating the finger ring-type device.

The pointing device that is an example of the controller 200 is an input device capable of indicating any position in the three-dimensional space such as VR or AR. For example, the information processing apparatus 100 recognizes the position and posture of 6DoF of the pointing device by a tracking method such as a bright spot tracking method, a magnetism tracking method, or an ultrasonic tracking method.

The 6DoF input device that is an example of the controller 200 is, for example, an input device capable of operating 6DoF.

Note that, in the example of FIG. 1, the user grips the controller 200 with the right hand, but the controller 200 may be gripped with the left hand, or may be gripped and operated with the left and right hands. Alternatively, a pair of controllers for the right hand and the left hand of the user may be gripped. In the case of a pair, the shapes and functions of the controllers for the right hand and the left hand may be the same or different. In addition, a predetermined function may be assigned by the user. Furthermore, it is not limited to being gripped by the hand of the user, and, for example, it may be worn on a part of the body of the user such as an elbow, an arm, a knee, an ankle, and a thigh. For example, one of the controllers 200 may have a trifurcated shape, and the other may have a ring shape.

Furthermore, in the information processing system according to the present embodiment, for example, the information processing apparatus 100 may include a sensor that detects the line of sight of the user, and the user can be caused to perform various operations in a three-dimensional space such as VR or AR by the line of sight of the user detected by the sensor. In addition, not only the line of sight but also any pointing may be possible, and the user may be caused to perform various operations in a three-dimensional space based on the pointing. Note that, in such a case, the information processing system according to the present embodiment does not need to include the controller 200.

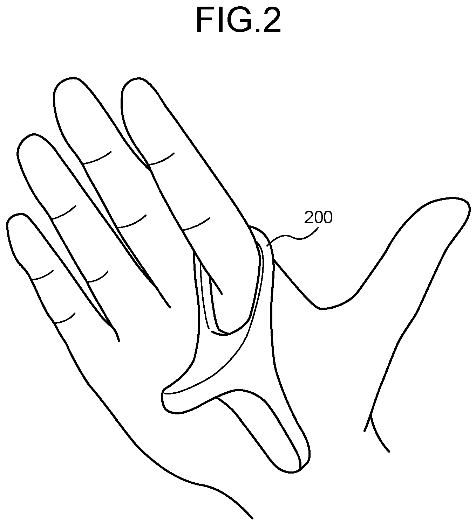

FIG. 2 is a view illustrating an example of the controller 200 according to the present embodiment. The controller 200 illustrated in FIG. 2 is, for example, a control device of a type that is hooked on an index finger of a user and gripped. The controller 200 detects at least one of an operation input by the user and a behavior of the user (for example, a gesture) by, for example, at least one of an operation unit such as a button and a sensor. Furthermore, the controller 200 transmits, for example, a signal including at least one of an operation input signal indicating an operation input of the user and a behavior signal indicating a behavior of the user to the information processing apparatus 100. As a result, the information processing apparatus 100 that has received the signal can, for example, operate a virtual object corresponding to the controller 200 in a three-dimensional space such as VR or AR, to cause the user to behave as if the user exists in the three-dimensional space such as VR or AR.

Note that the controller 200 may be any device as long as the device can acquire position information in the real space, for example. For example, the controller 200 may be an air mouse, a digital camera, a smartphone, or the like. Furthermore, in a case where the information processing apparatus 100 can capture the position and posture information of the controller 200, the controller 200 does not need to include the sensor in the own apparatus. For example, the controller 200 may be a predetermined object, a human face, a finger, or the like including a marker that can be recognized by the information processing apparatus 100 or a predetermined external device (such as a video camera installed in the real space).

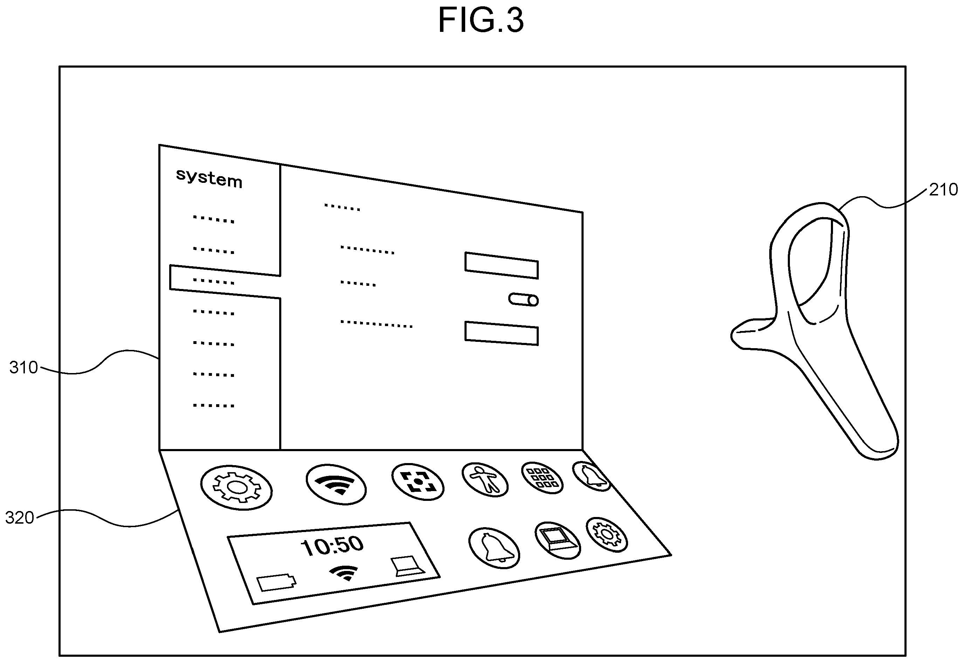

The virtual object displayed in a three-dimensional space such as VR or AR will be described. FIG. 3 is a view illustrating a display example of each object in the three-dimensional space according to the present embodiment. The example of FIG. 3 illustrates a virtual controller 210 and virtual operation panels 310 and 320, which are displayed in a three-dimensional space such as VR or AR displayed on the display of the information processing apparatus 100.

The virtual controller 210 is, for example, a virtual object corresponding to the controller 200 in the real space. The user can move the virtual controller 210 in the three-dimensional space in the same manner as the controller 200 by moving the controller 200 in the real space, for example.

The virtual operation panels 310 and 320 are, for example, virtual objects of an operation panel including a user interface (UI) such as an icon or a button for performing various operations. The virtual operation panels 310 and 320 illustrated in the example of FIG. 3 are laptop operation panels. For example, by selecting icons arranged in a tile shape on the virtual operation panel 320, a menu or an operation unit for performing an operation corresponding to the selected icon is displayed on the virtual operation panel 310. The user can perform various operations by operating the virtual operation panels 310 and 320 using the virtual controller 210, for example.

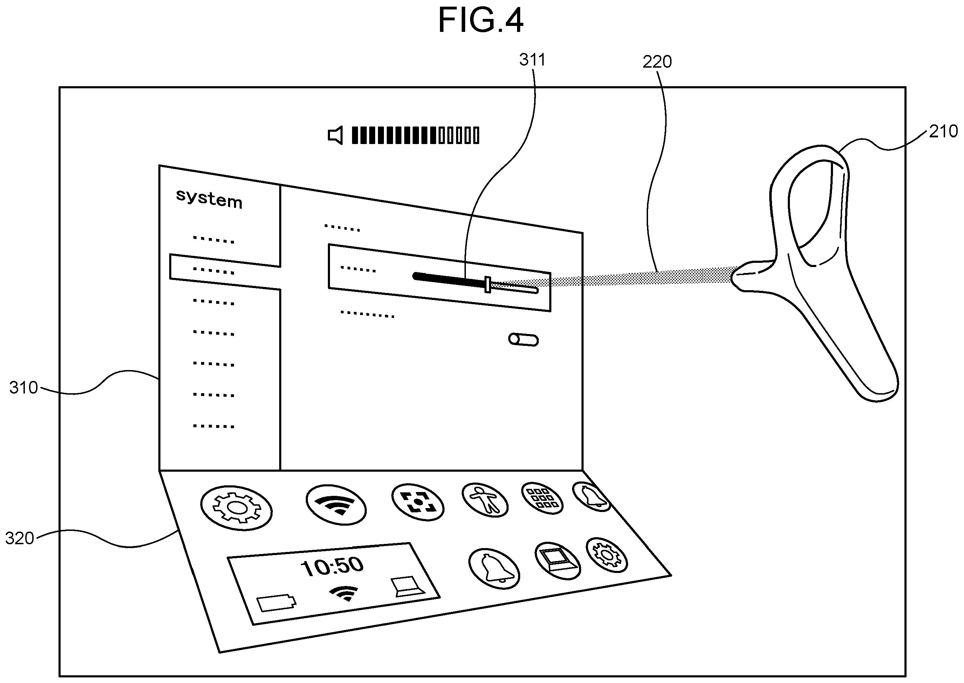

FIG. 4 is a view for describing an operation by a ray 220 in the three-dimensional space. FIG. 4 illustrates an example of a case where the virtual operation panel 310 or 320 is operated by performing irradiation with the ray 220 using the virtual controller 210. For example, when the user presses a button provided in the controller 200 in the real space, the ray 220 is emitted from the virtual controller 210 as illustrated in FIG. 4. Then, for example, the user operates the virtual controller 210 to align the ray 220 with an operation target 311 of the virtual operation panel 310 at a separate position as illustrated in FIG. 4 and perform an operation (FIG. 4 illustrates an example in which the volume output from the information processing apparatus 100 is operated by grasping the operation target 311 and sliding the operation target to the right or left).

However, for example, as the operation target moves farther away, the operation feeling of the ray 220 becomes as if the operation is performed with long chopsticks, and as the operation target moves closer, the ray 20 becomes shorter, the visibility decreases, and a fine operation becomes difficult. In particular, in a case where fine work such as CAD is required, the degree of difficulty of the operation by the ray 220 also increases.

Therefore, one object of the present embodiment is to more easily perform a user operation in a three-dimensional space such as VR or AR by performing irradiation with a torch UI using the virtual controller 210.

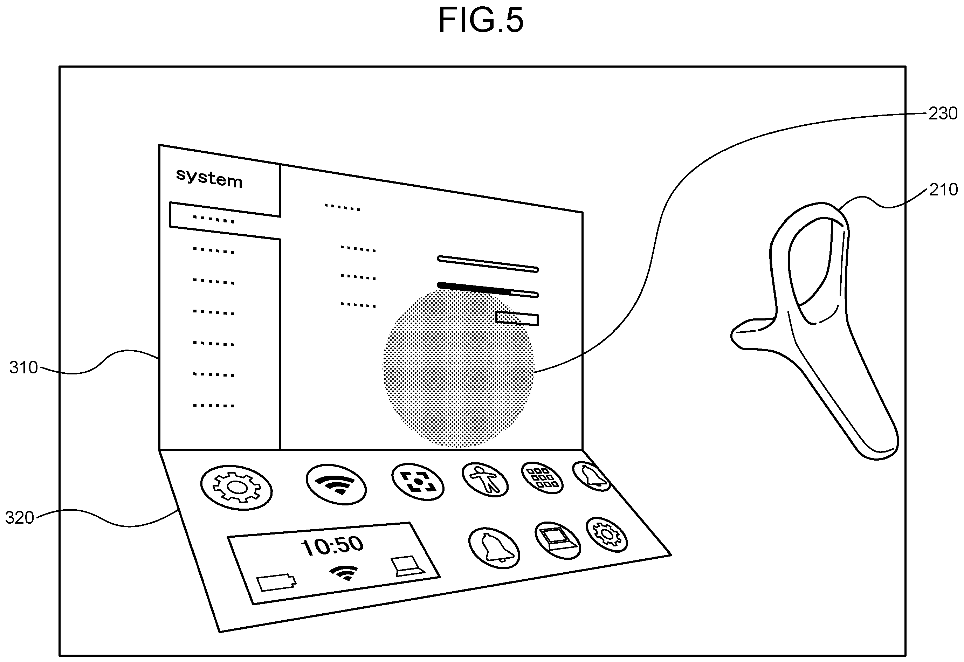

FIG. 5 is a view for describing an operation by a torch UI 230 according to the present embodiment. FIG. 5 illustrates an example of a case where irradiation with the torch UI 230 is performed using the virtual controller 210 to operate the virtual operation panels 310 and 320. The torch UI 230 is, for example, a UI as illustrated in FIG. 5 that is irradiated from the virtual controller 210 and illuminates a virtual object such as the virtual operation panel 310 like a light of a flashlight.

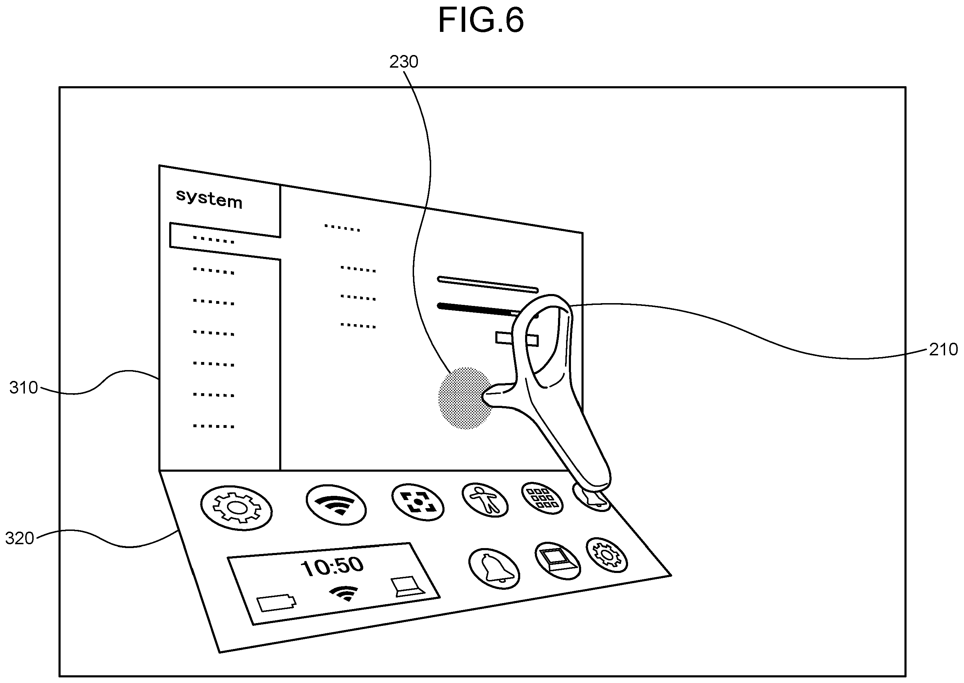

FIG. 6 is a view illustrating a display example of the torch UI 230 in a case where approach to an object has occurred, according to the present embodiment. As illustrated in FIG. 6, for example, as compared with the example illustrated in FIG. 5, when the virtual controller 210 is brought closer to the virtual operation panel 310, the torch UI 230 is displayed smaller and darker. Note that, in the examples of FIGS. 5 and 6, the torch UI 230 is illustrated as a circular UI, but it is not limited to this. The torch UI may be a polygon such as a square, or may have other shapes, and the size, shading, and the like of the shape change in accordance with the distance from an irradiation point to an irradiation destination (operation target). As described above, in the torch UI 230, the irradiation destination (operation target) can be more intuitively recognized. Thus, the user operation in the three-dimensional space such as VR or AR can be more easily performed. Note that the degree of change in the shape and shading of the torch UI 230 may be set in advance, for example, or may be freely changed by the user side.

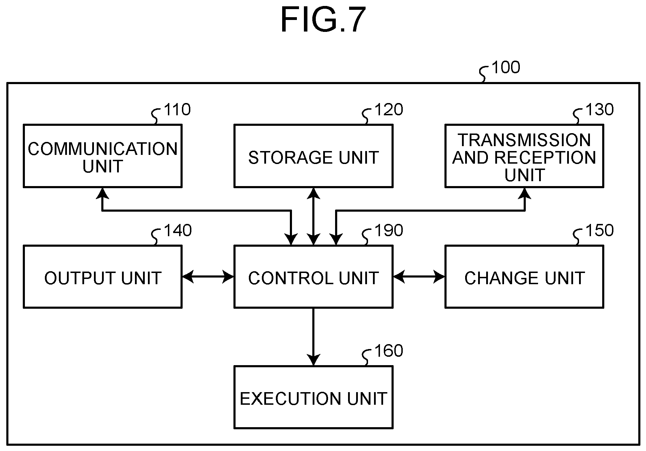

Next, the information processing apparatus 100 serving as an execution entity of the present embodiment will be described. FIG. 7 is a block diagram illustrating a functional configuration example of the information processing apparatus 100 according to the present embodiment. As illustrated in FIG. 7, the information processing apparatus 100 according to the present embodiment includes, for example, a communication unit 110, a storage unit 120, a transmission and reception unit 130, an output unit 140, a change unit 150, an execution unit 160, and a control unit 190.

### (Communication Unit 110)

The communication unit 110 according to the present embodiment is connected to the controller 200 in a wireless or wired manner, for example, and transmits and receives data. Furthermore, the communication unit 110 may be connected to various communication networks such as the Internet in a wireless or wired manner, for example, and may transmit and receive information to and from other devices of the network. The network may be, for example, a communication network such as a local area network (LAN), a wide area network (WAN), a telephone network (mobile telephone networks, fixed telephone networks, and the like), a regional Internet protocol (IP) network, or the Internet.

### (Storage Unit 120)

The storage unit 120 according to the present embodiment is a storage area for temporarily or permanently storing various programs and various types of data. For example, the storage unit 120 can store programs and data for the information processing apparatus 100 to execute various functions. As a specific example, the storage unit 120 may store, for example, screen data for constructing a three-dimensional space such as VR or AR, a virtual object, and the like. Note that these are merely examples, and the type of data stored in the storage unit 120 is not particularly limited.

### (Transmission and Reception Unit 130)

The transmission and reception unit 130 according to the present embodiment receives, for example, a signal including at least one of an operation input signal indicating an operation input of the user and a behavior signal indicating a behavior of the user from the controller 200. Furthermore, the transmission and reception unit 130 may transmit, to the controller 200, a signal including at least one of a signal for vibrating the controller 200 and a signal for outputting sound from the controller 200, for example.

### (Output Unit 140)

The output unit 140 according to the present embodiment outputs, for example, a display for irradiating a predetermined range based on a first position pointed by the virtual controller 210 in a three-dimensional space such as VR or AR, that is, the torch UI 230. Note that, in a case where the information processing apparatus 100 does not include the controller 200 and performs an operation in the three-dimensional space such as VR or AR by the line of sight of the user, the first position pointed by the virtual controller 210 may be, for example, a position pointed by the line of sight of the user or the like.

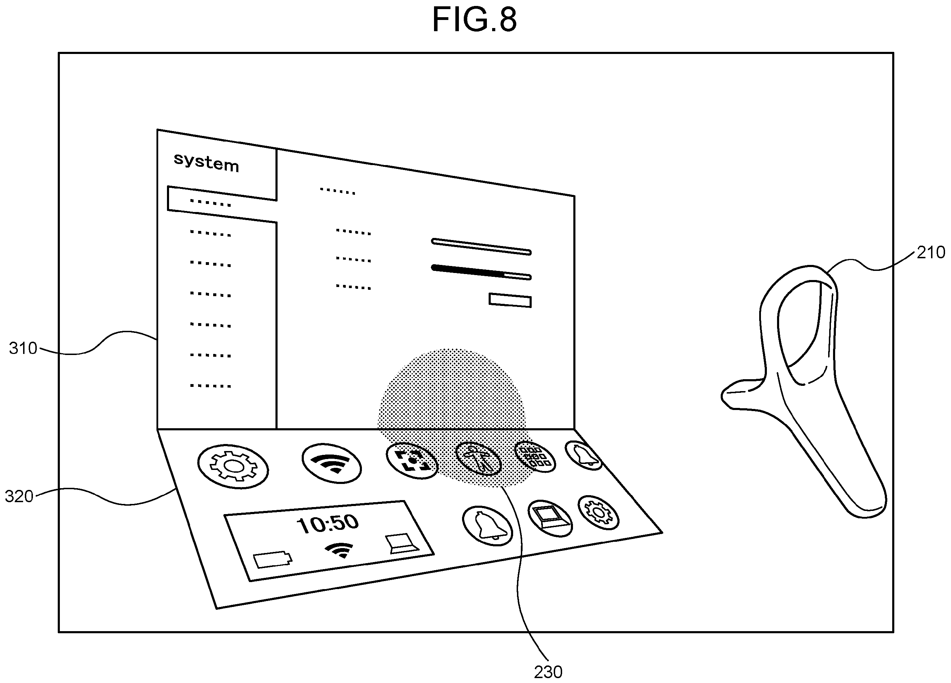

In addition, the output unit 140 displays an object for executing a predetermined operation, that is, virtual objects such as the virtual controller 210 and the virtual operation panels 310 and 320 in a three-dimensional space such as VR or AR, for example. FIG. 8 is a view illustrating a display example of the torch UI 230 for a three-dimensional object according to the present embodiment. As illustrated in FIG. 8, for example, the torch UI 230 may be refracted and displayed in accordance with the surface of the object to be irradiated (for the torch UI 230, in the example of FIG. 8, a part irradiated to the virtual operation panel 320 is refracted and displayed in accordance with the surface of the virtual operation panel 320).

Furthermore, the output unit 140 displays, for example, identification information for informing the outside which of VR and AR is being used, on an indicator provided in the information processing apparatus or the controller. The display of the indicator may be, for example, a color or a character indicating which of VR and AR is being used. Since the user who is using VR cannot see the real space, this makes it possible to notify the outside that VR is being used, and improve the safety of the user or the like. Furthermore, in a case where the user approaches a surrounding person or a real object such as a desk during use of VR, the user may be notified by displaying an alert in the three-dimensional space or outputting vibration or sound. In this manner, it is possible to improve the safety of the user and the others. Note that whether or not the user has approached the other person or the surrounding real object may be determined, for example, in a case where a distance between a preset boundary (guardian) of the virtual reality space and the surrounding other person or real object falls below a predetermined threshold value.

### (Change Unit 150)

The change unit 150 according to the present embodiment changes a display for irradiating the predetermined range, that is, the size of the torch UI 230 in accordance with a distance between the first position pointed by the virtual controller 210 and a second position of the virtual controller 210 in a three-dimensional space such as VR or AR, for example. The change in size of the torch UI 230 may be changed in accordance with the distance between the first position and the second position. The change unit 150 changes the size of the display of the torch UI 230 to be smaller as the distance between the two positions is shorter, for example. Note that, in a case where the information processing apparatus 100 does not include the controller 200 and performs an operation in the three-dimensional space such as VR or AR by the line of sight of the user, the second position of the virtual controller 210 may be, for example, the position of the information processing apparatus 100 or the head of the user.

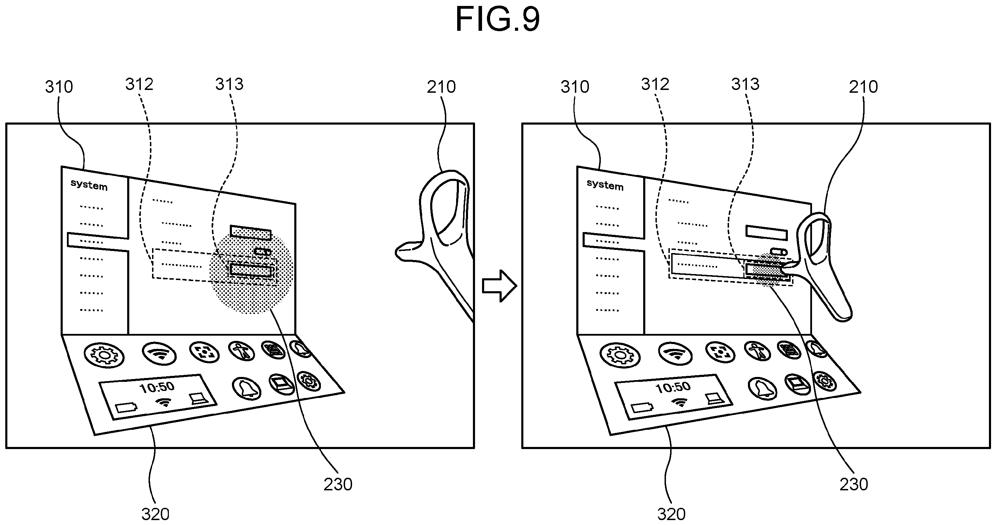

FIG. 9 is a view illustrating an example (1) of the operation by the torch UI 230 according to the present embodiment. FIG. 9 illustrates, for example, an example of a case where the torch UI 230 irradiates an operation portion 313 of an operation target 312 as the center in the virtual operation panel 310. As illustrated from the left side to the right side of FIG. 9, for example, when the virtual controller 210 is brought close to the operation portion 313 by a user operation, the size of the display of the torch UI 230 is changed to be small. In addition, the change unit 150 may change at least one degree of brightness, saturation, shading, and blurring of the display of the torch UI 230 in accordance with the distance between the first position pointed by the virtual controller 210 and the second position of the virtual controller 210, for example. Note that degrees of the brightness, saturation, shading, and blurring of the display of the torch UI 230 may be set in advance, for example, or may be freely changed by the user.

Furthermore, for example, when the operation portion of the object is irradiated by the display of the torch UI 230 and a second distance between the operation portion of the object and the second position of the virtual controller 210 becomes equal to or less than a predetermined threshold value, the change unit 150 changes the display of the operation portion to an operable state. For example, as illustrated in FIG. 9, when the distance between the operation portion 313 and the virtual controller 210 becomes short, the change unit 150 changes the display of the operation target 312 and the operation portion 313 so that the user can recognize that the operation portion 313 is operable. For example, the operation target or the operation portion may be changed to a color different from the surroundings, or the operation target or the operation portion may be displayed in a floating manner. In this manner, the visibility is improved, and the user can easily recognize the operation target or the operation portion.

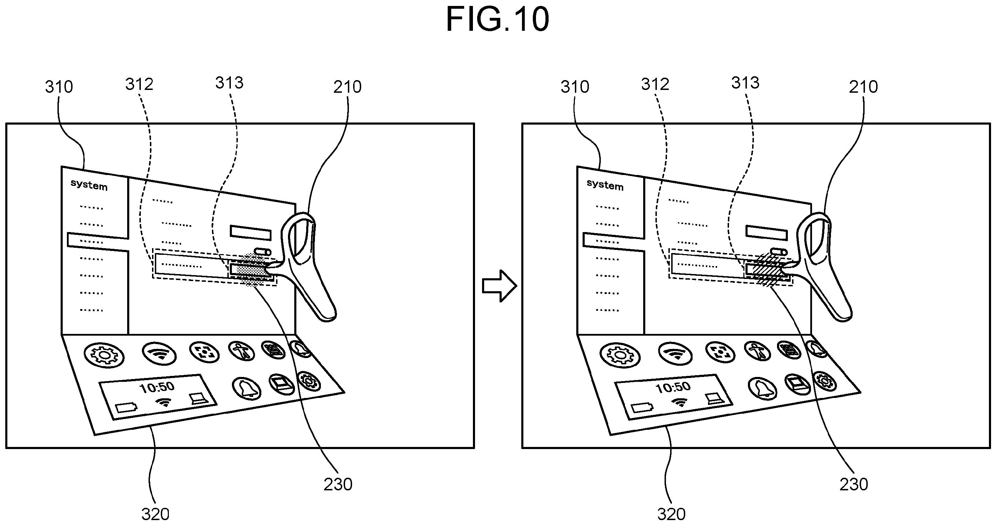

Furthermore, for example, when an operation is performed on the operation portion of the object, the change unit 150 changes the color of the display of the torch UI 230. FIG. 10 is a view illustrating an example (2) of the operation by the torch UI 230 according to the present embodiment. As illustrated from the left side to the right side of FIG. 10, for example, when an operation on the operation portion 313 is performed by a user operation such as pressing a button of the controller 200, the display color of the torch UI 230 is changed. In addition, for example, when a predetermined time has elapsed after the color of the display of the torch UI 230 is changed or when the operation on the operation portion of the object is completed, the change unit 150 brings the color of the display of the torch UI 230 back.

### (Execution Unit 160)

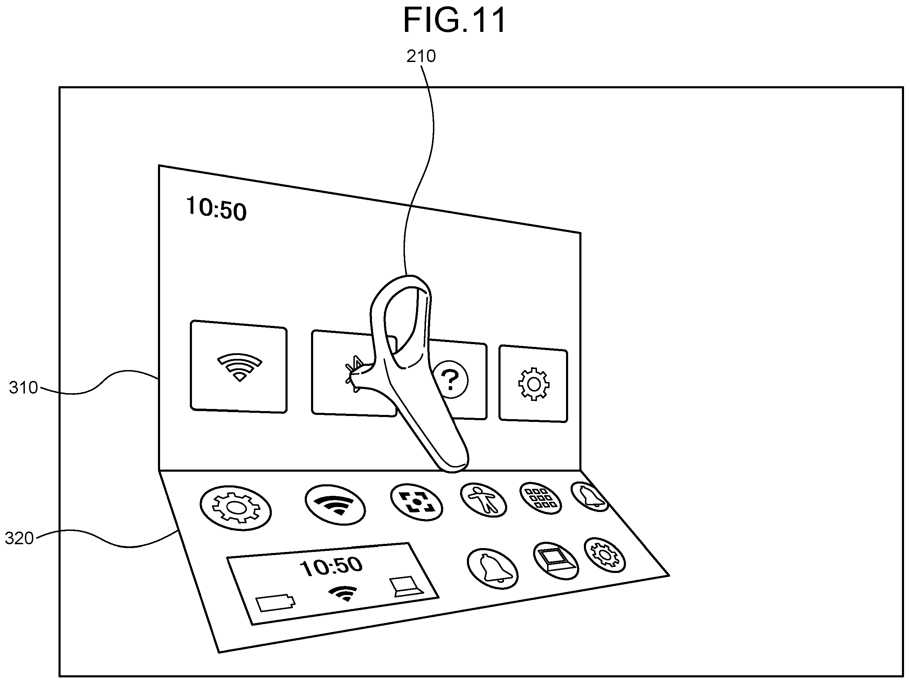

For example, when an operation is performed on the operation portion of the object, the execution unit 160 according to the present embodiment executes a process corresponding to this operation. Note that, for example, as illustrated in FIG. 10, execution of an operation on an operation portion of an object on a three-dimensional space such as VR or AR may be executed in response to a user operation such as pressing a button of the controller 200, from a position where the virtual controller 210 is separated from the operation portion, or may be executed in response to a direct operation by the virtual controller 210. FIG. 11 is a view illustrating another example of the operation by the torch UI 230 according to the present embodiment. As illustrated in FIG. 11, for example, the user can bring the virtual controller 210 into direct contact with the operation portion (for example, in a case where the operation portion is a button, the user brings the virtual controller 210 into contact with the operation portion to press the operation portion) to execute an operation on the operation portion.

Furthermore, for example, when an operation is performed on the operation portion of the object, the output unit 140 executes at least one of causing at least one of the controller 200 and the information processing apparatus 100 to vibrate, outputting sound from at least one of the controller 200 and the information processing apparatus 100, and displaying a message on the display of the information processing apparatus 100, and notifies the user. Furthermore, for example, when the operation on the operation portion of the object is completed, the output unit 140 executes at least one of causing at least one of the controller 200 and the information processing apparatus 100 to vibrate, outputting sound from at least one of the controller 200 and the information processing apparatus 100, and displaying a message on the display of the information processing apparatus 100, and notifies the user. Note that the vibration patterns and the types of sound in a case where the operation is performed on the operation portion of the object and in a case where the operation is completed may be the same or different.

### (Control Unit 190)

The control unit 190 according to the present embodiment controls each component provided in the information processing apparatus 100. Note that each component illustrated in FIG. 7 is merely an example, and the component controlled by the control unit 190 is not particularly limited to that in FIG. 7.

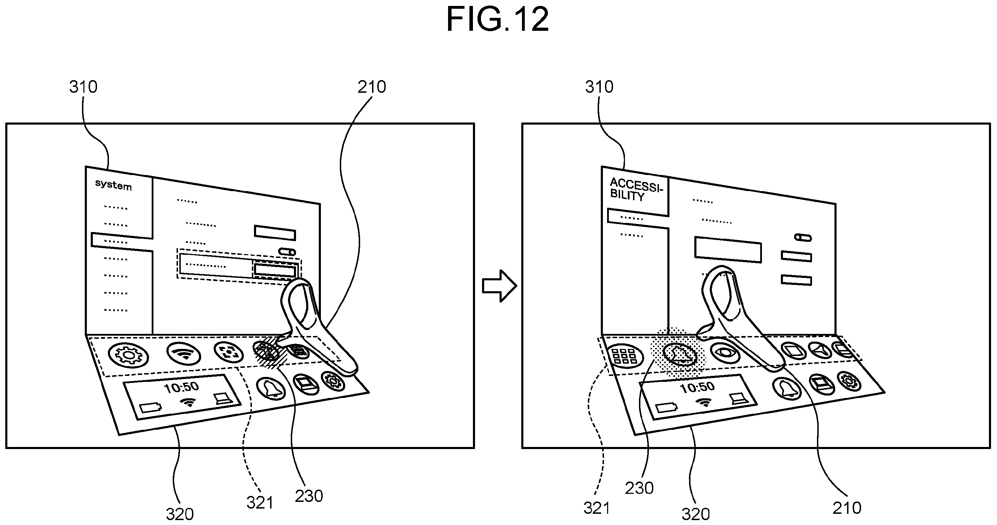

FIG. 12 is a view for describing an operation panel according to the present embodiment. FIG. 12 is a view for describing virtual operation panels 310 and 320, which are examples of virtual objects for performing various operations in a three-dimensional space such as VR or AR.

As illustrated in FIG. 12, the virtual operation panels 310 and 320 may be laptop operation panels, and may be displayed based on the position of the information processing apparatus 100 on a three-dimensional space such as VR or AR or the position of a specific part of the body such as the waist of the user. Therefore, for example, the virtual operation panels 310 and 320 may be displayed based on the position of the user so that the user can operate the virtual operation panels 310 and 320 by hand in the three-dimensional space. Alternatively, for example, in the case of AR, an object such as a keyboard is detected in the real space, and the virtual operation panels 310 and 320 may be displayed based on the position of the detected object. Furthermore, for example, the virtual operation panel 310 may be freely disposed in a floating manner, and the virtual operation panel 320 may be fixedly displayed at a position such as a desk by plane recognition.

The virtual operation panel 310 includes, for example, a menu portion of various operations in a left portion, and, by selecting an operation desired to be performed from the menu portion, a UI such as a button for performing a corresponding operation is displayed in a right portion.

In the virtual operation panel 320, for example, icons are arranged in a tile shape. By selecting the icon, a UI for performing an operation corresponding to the selected icon is displayed on the virtual operation panel 310. As illustrated in FIG. 12, icons of the virtual operation panel 320 can be displayed to be arranged horizontally long as illustrated as a slide portion 321, for example. Further, the icons can be horizontally slid by using the virtual controller 210. Furthermore, for example, when the user selects a specific icon, by changing the color of the icon or making the icon float up, it is possible to improve the visibility of the user.

### <Modification Examples>

The above embodiment may involve various modifications. Modification examples according to the embodiment will be described below.

### (Torch UI)

The torch UI schematically expresses illumination when a flashlight illuminates an object by using physical simulation or the like. Therefore, the information processing apparatus 100 may also express various physical phenomena that may occur in the real space, in a virtual space with respect to the expression of the torch UI.

For example, in the torch UI, the size of a circle of light, the degree of blurring (clarity), the density of the color, and the like change in accordance with a distance between an object displayed on the virtual space and the position at which the torch UI is irradiated from the virtual controller 210 on the virtual space. Furthermore, in the torch UI, the position and the angle of irradiation with light change in accordance with a direction in which the torch UI is irradiated from the virtual controller 210.

As described above, since the information processing apparatus 100 can change the expression of the torch UI in accordance with the operation and position of the virtual controller 210, it is possible to provide the user with an intuitive operation experience when selecting an object on the virtual space.

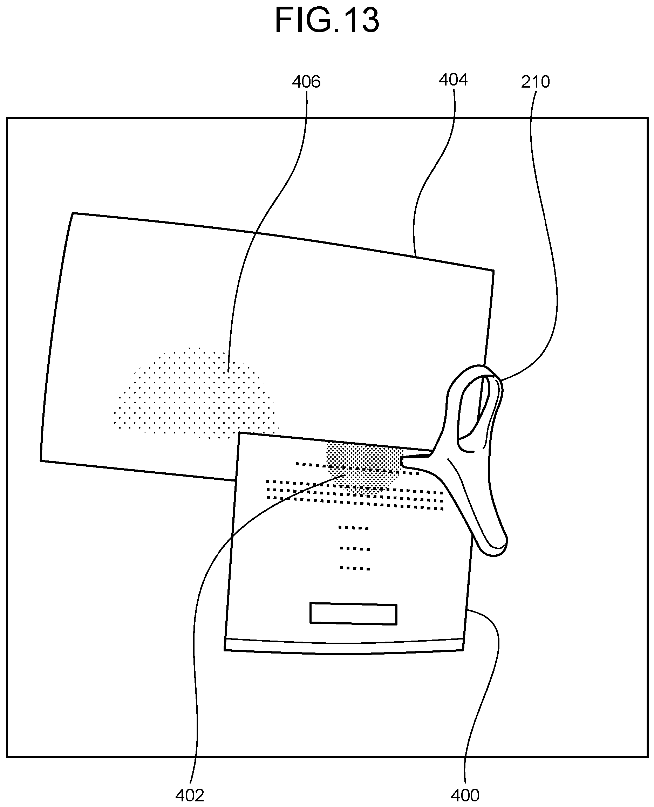

In addition, the information processing apparatus 100 can realize expression that cannot be realized by a pointer (mouse cursor or the like) in a general information processing device, by imitating a physical phenomenon in the torch UI. This point will be described with reference to FIG. 13. FIG. 13 is a view illustrating an example of the torch UI according to a modification example.

In the example illustrated in FIG. 13, the virtual controller 210, and a first virtual display 400 and a second virtual display 404 to be operated and selected by the virtual controller 210 in the virtual space are illustrated. In the example of FIG. 13, the first virtual display 400 is disposed closer to the virtual controller 210 (that is, the user) as compared with the second virtual display 404.

The user uses the virtual controller 210 to irradiate the first virtual display 400 with a torch UI 402. At this time, in a case where the range of the torch UI 402 with which the first virtual display 400 is irradiated protrudes from the end portion of the first virtual display 400, the information processing apparatus 100 determines that light also reaches the second virtual display 404 disposed at the back of the first virtual display 400. Then, the information processing apparatus 100 displays a torch UI 406 on the second virtual display 404.

That is, since the torch UI has a wide area like the real light, the torch UI can be expressed to apply light not only to one screen but also to a plurality of screens. As a result, the user can easily recognize the positional relationship between objects disposed in the virtual space, and can simultaneously select different objects displayed on a plurality of different screens.

Note that the torch UI over a plurality of screens can take a form similar to a real physical phenomenon, such as refraction in accordance with the angle of the operation panel as illustrated in FIG. 8.

### (Selection by Torch UI)

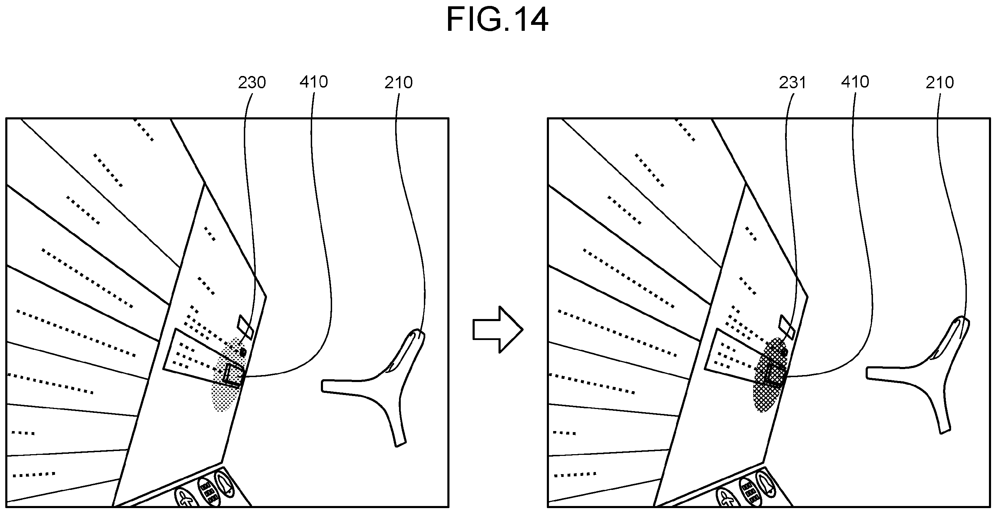

FIG. 9 described above illustrates an example in which the information processing apparatus 100 changes the display of the operation target to which the torch UI 230 applies light. This point will be described in more detail with reference to FIG. 14. FIG. 14 is a view illustrating an example (1) of an operation by the torch UI according to the modification example.

FIG. 14 illustrates a form in which the user visually recognizes the operation panel displayed in the virtual space from an oblique angle. In the example of FIG. 14, an operation button 410 illuminated by the light of the torch UI 230 is displayed to float from the operation panel in the vertical direction. For example, when the distance between the position (second position) of the virtual controller 210 and the position (first position) of the operation button 410 becomes equal to or less than a predetermined threshold value, the information processing apparatus 100 changes the expression of the operation button 410 to float from the operation panel. Alternatively, in a case where it is determined that the torch UI 230 is in a state of selecting the operation button 410 over a predetermined time, the information processing apparatus 100 may change the expression of the operation button 410 so as to float from the operation panel.

Furthermore, the information processing apparatus 100 may change the color of light illuminating the operation button 410 under a predetermined condition. A torch UI 231 illustrated in FIG. 14 illustrates an example in which the color of light of the torch UI 230 is changed. For example, in a case where it is determined that the torch UI 230 is in a state of selecting the operation button 410 over a predetermined time, the information processing apparatus 100 may change the color of the light illuminating the operation button 410 and change the torch UI 230 to the display form of the torch UI 231. Alternatively, in a case where it is determined that the operation button 410 has been pressed, the information processing apparatus 100 may change the color of the light illuminating the operation button 410. As a result, the user can perceive the pressing of the operation button 410 as the change in color.

Note that, when the operation button 410 is illuminated by the torch UI 230, the information processing apparatus 100 may change an area including the operation button 410 to a color different from the surrounding background. For example, the information processing apparatus 100 changes a partial area including the operation button 410 to a color darker than the surrounding background. As a result, the information processing apparatus 100 can make the user more easily perceive the selection target.

Furthermore, in a case where a predetermined time has elapsed, the information processing apparatus 100 may bring the changed color back to the original color. As a result, even though an object is temporarily selected, the user can operate the operation panel returned to the normal display in a case where the user does not intend to select the object. Therefore, the user can use the UI in which usability that is not different from usual is realized.

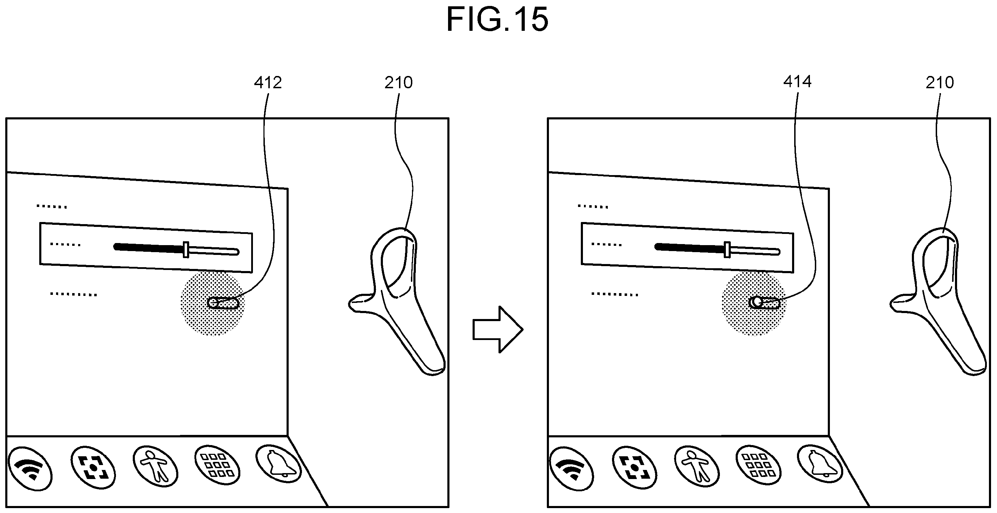

Further, another display example will be described with reference to FIG. 15. FIG. 15 is a view illustrating an example (2) of the operation by the torch UI according to the modification example.

In the example of FIG. 15, the user uses the virtual controller 210 to select an operation button 412 that is a button (may be referred to as a toggle button, a slider button, an on/off switch, and the like) for changing a specific setting by shifting to the left and right. At this time, in a case where it is determined that the torch UI 230 is in a state of selecting the operation button 412 over the predetermined time, the information processing apparatus 100 changes the operation button 412 to a 3D operation button 414. The 3D operation button 414 is an operation button displayed such that a movable portion of the toggle switch floats from the operation panel. As a result, the user can perform an operation using the operation button having excellent visibility, and thus, for example, even in a case where a setting item and the like are displayed relatively small on the operation panel, the user can perform a reliable operation without making an error in the operation.

Note that the example illustrated in FIG. 15 is not limited to the button for shifting the selection target to the left and right, and can be applied to any screen display such as the slider illustrated in FIG. 4, for example.

### (Switching between Ray (Light Beam) and Torch (Illumination))

In FIG. 4, it has been described that not only the torch UI but also the operation by the ray (light beam) can be performed in the virtual space. The operation using the ray may increase the degree of difficulty of the operation in a case where fine work such as CAD is required. However, there are advantages that it is easy to select a virtual object, for example, in a case where the virtual object is disposed far away, and it is easy for the user to see a target direction.

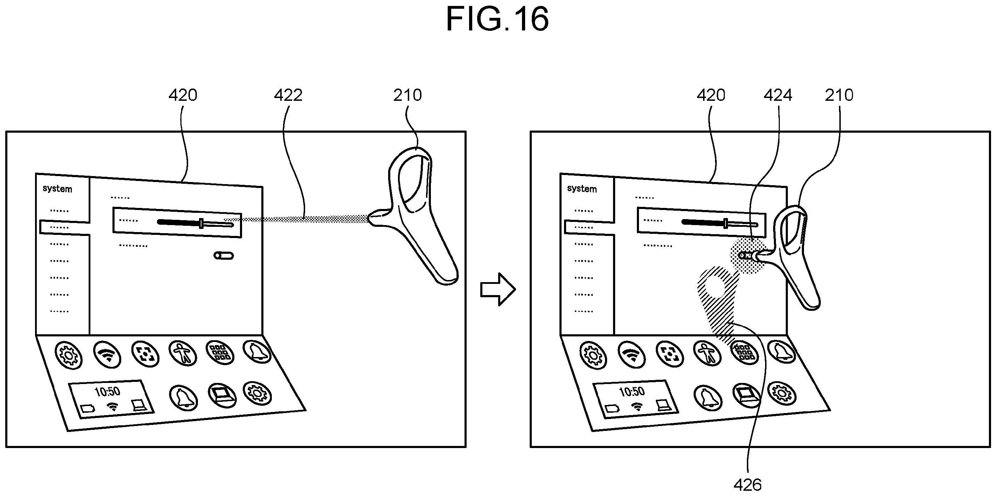

Thus, the information processing apparatus 100 may use two types of UIs of the lay and the torch. This point will be described with reference to FIG. 16. FIG. 16 is a view for describing usage of the UIs.

The left view of FIG. 16 is an example of a case where a virtual operation panel 420 is operated by irradiating a ray 422 using the virtual controller 210. At this time, it is assumed that the virtual operation panel 420 is disposed relatively far from the user.

After that, in a case where the user approaches the virtual operation panel 420 or the user performs an operation of approaching the virtual operation panel 420, a distance between the user (that is, the virtual controller 210) and the virtual operation panel 420 becomes shorter. Then, the information processing apparatus 100 changes a UI for operating the icon or the like of the virtual operation panel 420 from the ray 422 to a torch UI 424 under a predetermined condition.

For example, in a case where the distance between the virtual controller 210 and the virtual operation panel 420 is shorter than a predetermined threshold value, the information processing apparatus 100 dynamically switches the UI from the ray 422 to the torch UI 424. Alternatively, the information processing apparatus 100 may change the UI from the ray 422 to the torch UI 424 based on an explicit operation such as a gesture or a voice input by the user.

Note that, in a case where the virtual controller 210 is sufficiently close to the virtual operation panel 420, the information processing apparatus 100 may execute an operation of a form in which the virtual controller 210 is pressed and brought into contact with the virtual operation panel 420 as illustrated in FIG. 11.

As a result, the information processing apparatus 100 can provide the user with an operation experience utilizing each advantage of the operation by the ray and the operation by the torch.

### (Shadow Display of Controller)

Furthermore, in the right view of FIG. 16, in a case where the virtual controller 210 approaches the virtual operation panel 420, the information processing apparatus 100 may display a shadow 426 of the virtual controller 210 on the virtual operation panel 420 based on a virtual light source. For example, in a case where the virtual light source exists in the virtual space in a direction from the rear of the virtual controller 210 toward the virtual operation panel 420, the shadow 426 of the virtual controller 210 is displayed on the virtual operation panel 420. In addition, a process of changing the shade, shape, color, and the like of the shadow 426 in accordance with a distance between the virtual controller 210 and the virtual operation panel 420 may be performed.

As a result, the user can intuitively understand that the virtual controller 210 and the virtual operation panel 420 are close to each other. As a result, the information processing apparatus 100 can improve the operability of the user.

Note that the information processing apparatus 100 may display the shadow 426 of the virtual controller 210 not only on the virtual space but also on the real space in a case where AR or the like is used. For example, the information processing apparatus 100 estimates a light source in the real space based on a phenomenon such as scattering of light detected by an image sensor or an optical sensor. Then, the information processing apparatus 100 displays the shadow 426 as an object superimposed on the real space, such as AR, based on the estimated light source. As a result, since the user can perceive the presence of the virtual controller 210 also in the real space, the user can appropriately operate the operation target superimposed on the real space. For example, in a case where a real object such as a table or a desk exists in the target real space, the shadow 426 may be projected on the real object such as the table or the desk. Here, the shadow 426 may be projected on one or a plurality of surfaces of the real object. In addition, the information processing apparatus 100 may change the shade, shape, color, and the like of the shadow 426 in accordance with a distance between the virtual controller 210 and the real object.

### (Clarity of Light)

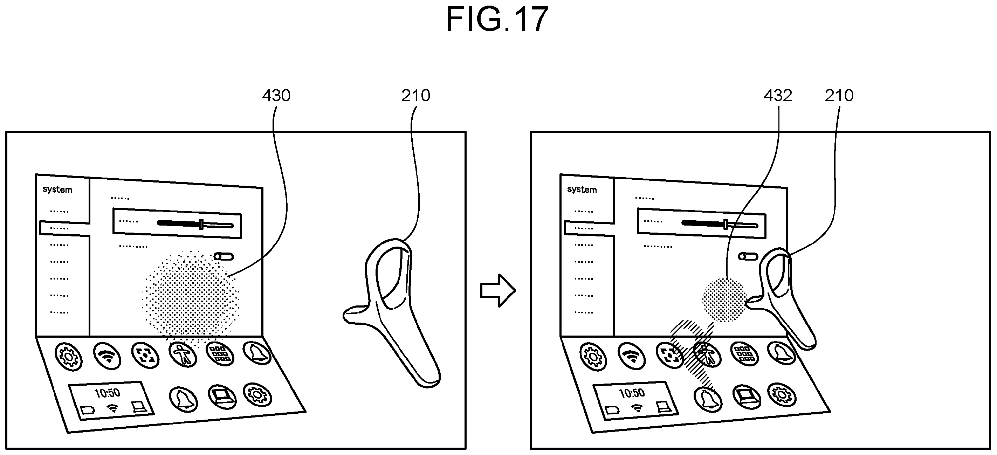

The information processing apparatus 100 can display the display of the torch UI like real light based on a physical simulation regarding light. This point will be described with reference to FIG. 17. FIG. 17 is a view illustrating an example of display of the torch UI.

For example, the information processing apparatus 100 changes the clarity of the contour of the outer peripheral portion of a torch in accordance with a distance between the virtual controller 210 and an object to which the light of the torch UI is applied. In the example illustrated in the left view of FIG. 17, it is assumed that the virtual controller 210 is disposed far from the operation panel to which a torch UI 430 is applied. In this case, the torch UI 430 has low clarity, and in particular, the outer peripheral portion is expressed in a blurred manner.

On the other hand, in the example illustrated in the right view of FIG. 17, it is assumed that the virtual controller 210 is close to the operation panel to which the torch UI 432 is applied. In this case, the torch UI 432 has high clarity and is clearly expressed without blurring the outer peripheral portion.

As described above, the information processing apparatus 100 can make the user feel whether an object as an operation target is located far from or close to the user by expressing light imitating a real physical phenomenon.

### (Display of Operation Target)

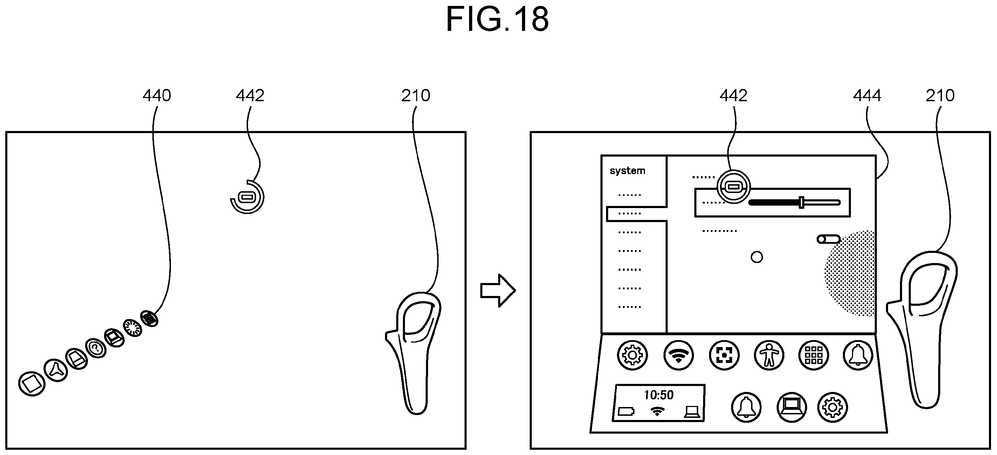

In a case where there is no object as an operation target at a destination directed by the viewpoint of the user or at a destination directed by the virtual controller 210, the information processing apparatus 100 may display the object at the destination of the line of sight. Such a process will be described with reference to FIG. 18. FIG. 18 is a view illustrating an example of the display of the operation target.

The left view of FIG. 18 illustrates an example in which there is no operation target at the destination of the virtual controller 210, and an icon 440 to be the operation target is shifted from a selection area of the virtual controller 210. At this time, the information processing apparatus 100 displays a display 442 in the virtual space.

The display 442 is, for example, a circular display to which a circular slider is attached. The circular slider continues to be displayed unless the user changes the direction of the virtual controller 210, and measures the time during which the user does not change the direction of the virtual controller 210. When a predetermined time has elapsed, the circular slider indicates, to the user, that the display has expired by making a turn.

Then, the information processing apparatus 100 displays an operation panel 444 being an operation target of the virtual controller 210, at a position superimposed on the display 442. That is, in a case where there is no virtual display such as the virtual operation panel in a direction in which the user performs viewing, the information processing apparatus 100 disposes again the virtual operation panel or the like at the destination of the line of sight of the user (for example, the center of the screen). As a result, even if the user loses sight of the operation panel in the virtual space, the user can cause the operation panel to be immediately displayed at the destination of the line of sight.

Note that the information processing apparatus 100 may dispose again the virtual display not in a case where time has elapsed but in a case where the user performs an explicit operation such as pressing a button installed in the controller 200.

### (3D Display of Torch)

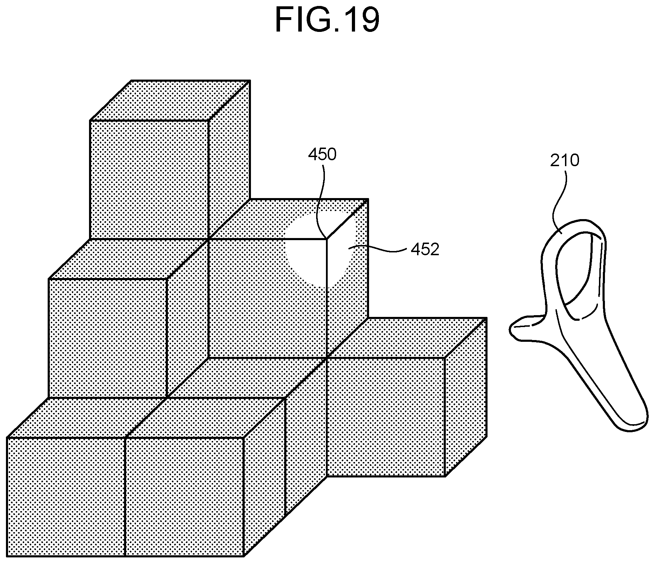

As described above, since light related to the torch UI is displayed based on the physical simulation, the information processing apparatus 100 can reproduce an expression of the torch UI as if light is applied to a real object. This point will be described with reference to FIG. 19. FIG. 19 is a view illustrating an example of display for selecting a virtual object.

FIG. 19 illustrates an example in which a plurality of cubes are displayed as virtual objects. Normally, the user selects a virtual object by using a cursor or the like, but, in a case where the virtual object has three-dimensional information, it is difficult for the user to point at the target position with the cursor or the like. This is because objects overlap each other in the virtual space, and thus an object can or cannot be selected depending on the depth even at a position selected by the user. Furthermore, since the virtual object itself also has depth information, for example, even if the user tries to select a certain vertex, it is difficult for the user to actually point to the point.

In this point, the virtual controller 210 can select a vertex 450 by directing a torch UI 452 to the vertex 450 and including the vertex 450 in the area of the light. That is, the user can easily select vertex 450 without performing a precise operation of overlapping the pointer on the vertex 450.

Furthermore, at this time, the information processing apparatus 100 reproduces light of the torch UI 452 along the object as if the light goes around the object, as if light is applied to a real object. Note that, as illustrated in FIG. 8, the information processing apparatus 100 can change a form of the display for irradiating a range in accordance with the display angle of the object such as the virtual operation panel 320 disposed on the virtual space. That is, the information processing apparatus 100 can realize a UI in a form in which a real object is illuminated with illumination. As a result, the user can feel a sense of reality as if an object is illuminated with a flashlight in reality while being in the virtual space.

### (Information Processing Regarding Surroundings of User)

In the above embodiment, an example in which, while the user is using the information processing apparatus 100, the information processing apparatus 100 displays the indicator for notifying the outside which of VR and AR the user is using has been described. The present embodiment is not limited to this, and the information processing apparatus 100 may output various types of information. For example, the information processing apparatus 100 may notify the user that the user is approaching a surrounding other person or a real object, in a case where a distance between a preset boundary (guardian) of the virtual reality space and the surrounding other person or the real object in the real space falls below a predetermined threshold value. As a result, the user can consider safety while experiencing XR with an immersion feeling.

### (Application of Torch UI)

The UI described in the embodiment and the modification examples can be applied to, for example, three-dimensional CAD. However, such a UI is not necessarily limited to CAD designed for construction or drafting, and may be applied to any production field on a computer. That is, the UI is applicable not only to CAD but also to various creation software and technical fields referred to as digital contents creation (DCC), user-generated content (UGC), and the like. Furthermore, such a UI is not particularly limited in application, and can be applied as a UI in any information processing field.

In addition, as illustrated in FIG. 11, the information processing apparatus 100 can determine that a part of the virtual controller 210 has virtually come in contact with an object disposed in the virtual space, and can also execute a process of responding to the contact portion in accordance with the determination result. As described above, the UI does not necessarily adopt a form of a torch or a ray, and can receive various operations in accordance with a display form of an icon or the like as the operation target.

### (Form of Controller)

As described in the embodiment, the controller 200 can acquire information related to an input of 6DoF (6 degrees of freedom), and can reflect the acquired information on the display of the virtual object. As illustrated in FIG. 2, the controller 200 is held by the user's hand or finger. As a result, since the user can give the same acceleration information and the like as the motion of the user's body to the controller 200, it is possible to intuitively realize the display of the virtual screen in accordance with the motion of the user. For example, by inclining the controller 200, the user can gaze at a virtual object inclined according to the inclination or intuitively instruct an operation with a UI (operation panel or the like) inclined at an angle that is easy for the user to use. In this manner, the information processing apparatus 100 can acquire the angle information of the information processing apparatus 100 acquired in conjunction with the body motion of the user, and change the form of the torch UI or the virtual controller 210 based on the acquired angle information.

### (Variations of Torch Display)

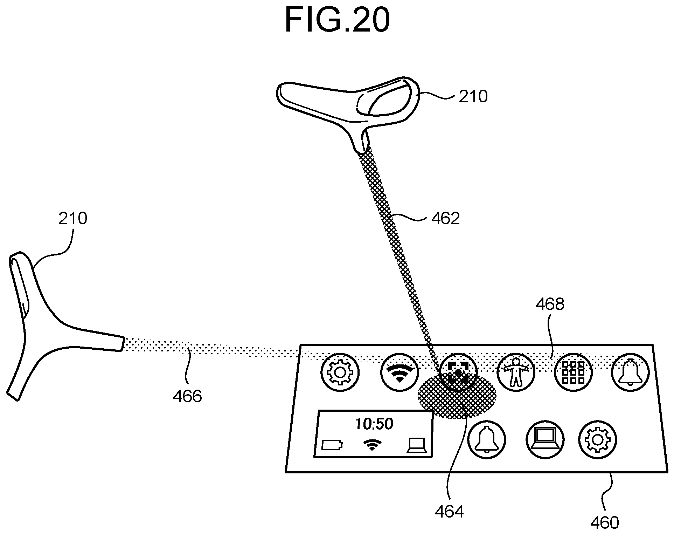

Since the torch UI imitates a real physical phenomenon, various expressions are possible. FIG. 20 illustrates a display example of the torch UI. FIG. 20 is a view illustrating an example of a display form of the torch UI.

FIG. 20 illustrates a light beam 462 in a case of applying the virtual controller 210 from the top of a screen 460 and a light beam 466 in a case of applying the virtual controller 210 from the side of the screen 460 in an XR space. Since the light beam 462 is incident on the screen 460 at a relatively obtuse angle, a torch UI 464 corresponding to the light beam 462 may be displayed on the screen 460 in a form in which the color is relatively dark and clear, for example.

On the other hand, since the light beam 466 is incident on the screen 460 at an acute angle, a torch UI 468 corresponding to the light beam 466 is displayed on the screen 460 in a form in which the color is relatively light and the contour is blurred, for example. In addition, the torch UI 468 may be displayed wide and thin on the screen 460 to correspond to an incident angle.

As described above, the information processing apparatus 100 can reproduce a natural phenomenon in which the form of light illuminating an object changes depending on the incident angle in the torch UI. As a result, the information processing apparatus 100 can provide the user with a UI that can be used with a feeling similar to that of the torch in the real world, and can improve the use experience of the user.

### (Display Example According to Object)

Although the UI described in the embodiment and the modification examples is an example that can be used in three-dimensional CAD or the like, the information processing apparatus 100 can change the display form of the torch UI in accordance with an object because the object such as three-dimensional CAD has three-dimensional information such as mesh data. As an example, as illustrated in FIG. 19, the light of the torch UI 452 is reproduced to go around the object.

In this point, the information processing apparatus 100 may further express an object having a complicated shape by imitating a physical phenomenon. For example, in a case where the torch UI is applied to an object, the information processing apparatus 100 may add shading along the object or change the shape of the torch UI in accordance with the shape of the object, by expressing a light beam along the mesh data of the object. As a result, the information processing apparatus 100 can realize improvement in visibility and improvement in operability when editing an object having a complicated shape in a use case of three-dimensional CAD or the like, for example. That is, the information processing apparatus 100 can realize more intuitive and efficient work of a creator and reduce the burden on the creator.

In addition, even in a case where an object to which the torch UI is applied does not have the three-dimensional information, the information processing apparatus 100 may estimate the three-dimensional shape by using a known technique and change the display of the torch UI in accordance with the estimation result. For example, in a case where the information processing apparatus 100 recognizes an object having two-dimensional information as a display target, the information processing apparatus adds three-dimensional information such as mesh data to the object by using a technique of generating three-dimensional information from the two-dimensional information. Then, the information processing apparatus 100 changes the display of the torch UI in accordance with the added three-dimensional information. As a result, the information processing apparatus 100 can perform expression imitating light like the torch UI even on an object that does not correspond to the simulation of the physical phenomenon desired to be realized by the torch UI. Such a process is not limited to three-dimensional CAD, and may be applied in a virtual space such as a game or a metaverse.

### (UI Operation Other Than Controller)

In the embodiment, an example in which the torch UI is displayed at an arrival point of the light beam with which irradiation is performed from the virtual controller 210 has been described. However, the torch UI may be displayed by recognizing light other than the light beam with which irradiation is performed from the virtual controller 210.

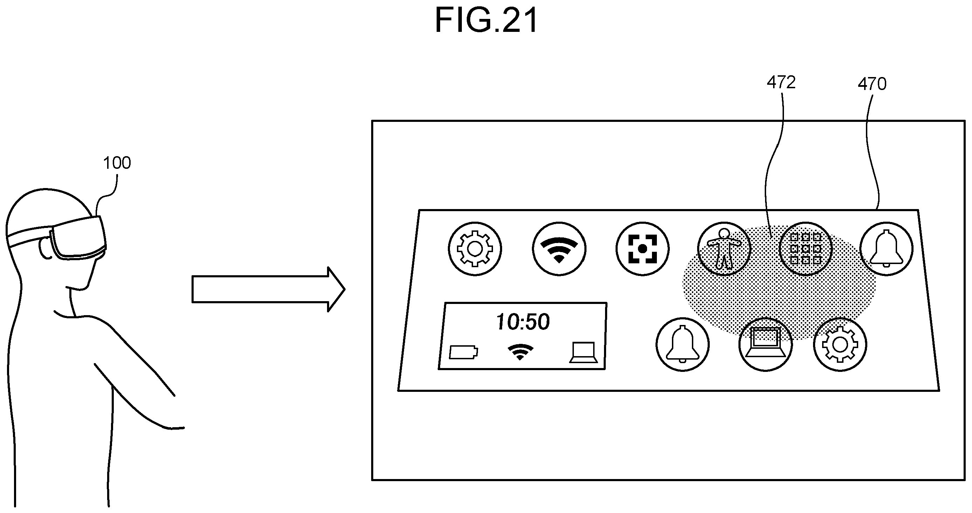

For example, the information processing apparatus 100 may realize the display of the torch UI by using a known line-of-sight detection technique. FIG. 21 is a view (1) illustrating a display example of the torch UI by input means other than the controller.

In FIG. 21, the information processing apparatus 100 detects a line of sight of the user wearing the information processing apparatus 100 and displays a torch UI 472 on a panel 470 that is a target object at a destination of the line of sight. As described above, the information processing apparatus 100 can display the torch UI without the user necessarily performing input by the virtual controller 210.

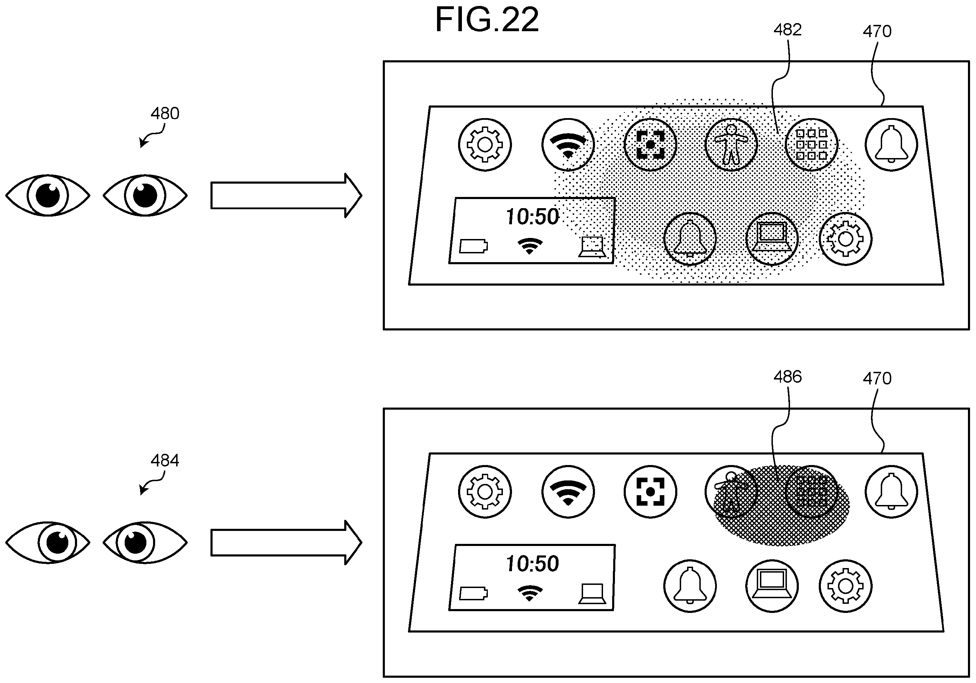

In addition, the information processing apparatus 100 may change the display form of the torch UI based on the line-of-sight detection. FIG. 22 is a view (2) illustrating a display example of the torch UI by the input means other than the controller.

In the example illustrated in FIG. 22, in a case where the information processing apparatus 100 detects a line-of-sight 480 in which the user is not particularly gazing at a target, the information processing apparatus displays a torch UI 482 that has low clarity and illuminates a relatively wide area, on the panel 470. This is a display example of the torch UI under a situation where the user has a weak intention to recognize some object or select some icon, and is viewing the panel 470 without being particularly conscious.

On the other hand, in a case where the information processing apparatus 100 detects a line-of-sight 484 in which the user intends to gaze at some target, the information processing apparatus displays a torch UI 486 that has high clarity and illuminates a relatively narrow area, on the panel 470. This is a state in which the user is trying to recognize some object or select some icon, and is a display example of the torch UI for pointing to some object on the panel 470.

As described above, the information processing apparatus 100 can change the display form of the torch UI in accordance with the line-of-sight detection and display the torch UI at a position desired by the user in a desired form, without the user performing any explicit operation. As a result, the information processing apparatus 100 can realize a UI display having high usability by a simpler operation without an operation of the controller or the like.

Note that the above example is not limited to the line of sight. The information processing apparatus 100 may display the torch UI in accordance with some type of input means, such as recognition by a camera or the like that the user has indicated a target with the hand or the finger. In addition, the information processing apparatus 100 may select whether to control the behavior of the torch UI by the controller or the like or to control the behavior of the torch UI by the line of sight or the like, in accordance with the explicit operation of the user. In addition, the information processing apparatus 100 may change the display form of the illuminated object, such as displaying the object illuminated by the torch UI to float.

### <2. Hardware Configuration Example>

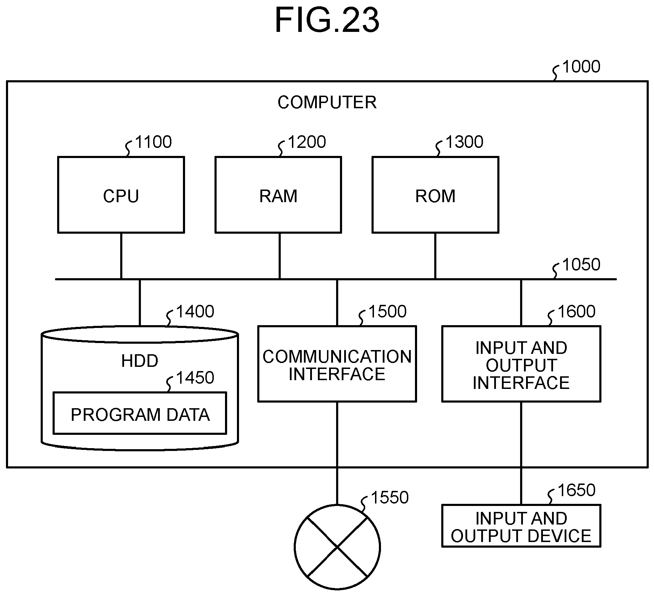

Next, a hardware configuration example of the information processing apparatus 100 according to the present embodiment will be described. An information device of the information processing apparatus 100 described above is realized by, for example, a computer 1000 having a configuration as illustrated in FIG. 23. FIG. 23 is a block diagram illustrating the hardware configuration example of the information processing apparatus 100 according to the present embodiment. The computer 1000 includes a CPU 1100, a RAM 1200, a ROM 1300, a hard disk drive (HDD) 1400, a communication interface 1500, and an input and output interface 1600. Each unit of the computer 1000 is connected by a bus 1050.

The CPU 1100 operates based on a program stored in the ROM 1300 or the HDD 1400, and controls each unit. For example, the CPU 1100 loads the program stored in the ROM 1300 or the HDD 1400 into the RAM 1200, and executes processes corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transitorily records a program executed by the CPU 1100, data used by the program, and the like. Specifically, the HDD 1400 is a recording medium that records a proposed program according to the present disclosure, which is an example of program data 1450.

The communication interface 1500 is an interface for a connection of the computer 1000 to an external network 1550 (for example, the Internet). For example, the CPU 1100 receives data from another device or transmits data generated by the CPU 1100 to another device via the communication interface 1500.

The input and output interface 1600 is an interface for connecting an input and output device 1650 and the computer 1000. For example, the CPU 1100 receives data from an input device such as a keyboard and a mouse via the input and output interface 1600. In addition, the CPU 1100 transmits data to an output device such as a display, a speaker, or a printer via the input and output interface 1600. In addition, the input and output interface 1600 may function as a medium interface that reads a program or the like recorded in a predetermined recording medium (medium). The medium is, for example, an optical recording medium such as a digital versatile disc (DVD) (registered trademark) or a phase change rewritable disk (PD), a magneto-optical recording medium such as a magneto-optical disk (MO), a tape medium, a magnetic recording medium, a semiconductor memory, or the like.

The CPU 1100 implements the functions of the control unit 190 and the like by executing the proposed program loaded onto the RAM 1200. In addition, the HDD 1400 stores the proposed program according to the present disclosure and data in the storage unit 120. Note that the CPU 1100 reads and executes the program data 1450 from the HDD 1400, but as another example, the CPU may acquire the program from another device via the external network 1550.

### <3. Summary>

As described above, the information processing apparatus 100 includes the control unit 190 that executes processes including outputting, to a three-dimensional space, a display for irradiating a predetermined range based on a first position pointed by a controller; and changing a size of the display in accordance with a distance between the first position on the three-dimensional space and a second position of the controller.

As described above, by making it easier to more intuitively recognize the position pointed by the controller in the three-dimensional space such as VR or AR, that is, recognize the irradiation destination (operation target), the information processing apparatus 100 can more easily perform a user operation in a three-dimensional space such as VR or AR.

In addition, the control unit 190 executes the process of changing the size of the display for irradiating the predetermined range to be smaller in accordance with the distance.

As a result, the information processing apparatus 100 can more easily perform a user operation in a three-dimensional space such as VR or AR.

Furthermore, the control unit 190 executes the process of changing the size of the display for irradiating the predetermined range to be smaller as the distance becomes shorter.

As a result, the information processing apparatus 100 can more easily perform a user operation in a three-dimensional space such as VR or AR.

In addition, the display for irradiating the predetermined range is circular.

As a result, the information processing apparatus 100 can more easily perform a user operation in a three-dimensional space such as VR or AR.

In addition, the control unit 190 executes the process of changing at least one degree of brightness, saturation, shading, and blurring of the display in accordance with the distance between the first position and the second position.

As a result, the information processing apparatus 100 can more easily perform a user operation in a three-dimensional space such as VR or AR.

In addition, the control unit 190 executes the processes including displaying an object for performing a predetermined operation, and changing the display of the operation portion of the object to be in an operable state when the operation portion is irradiated by the display and the second distance between the operation portion of the object and the second position becomes equal to or less than a predetermined threshold value.

As a result, the information processing apparatus 100 can more easily perform a user operation in a three-dimensional space such as VR or AR.

In addition, when an operation is performed on the operation portion of the object, the control unit 190 executes the process of changing the display so that the operation portion floats up.

As a result, the information processing apparatus 100 can more easily perform a user operation in a three-dimensional space such as VR or AR.

In addition, when an operation is performed on the operation portion, the control unit 190 executes the process of changing the color of the display.

As a result, the information processing apparatus 100 can more easily perform a user operation in a three-dimensional space such as VR or AR.

In addition, when the operation on the operation portion is completed, the control unit 190 executes the process of bringing the color of the display back.

As a result, the information processing apparatus 100 can more easily perform a user operation in a three-dimensional space such as VR or AR.

In addition, when an operation is performed on the operation portion, the control unit 190 executes at least one of the processes including causing at least one of the controller 200 and the information processing apparatus 100 to vibrate, outputting sound from at least one of the controller 200 and the information processing apparatus 100, and displaying a message on the display of the information processing apparatus 100.

As a result, the information processing apparatus 100 can more easily perform a user operation in a three-dimensional space such as VR or AR.

In addition, when the operation on the operation portion is completed, the control unit 190 executes at least one of the processes including causing at least one of the controller 200 and the information processing apparatus 100 to vibrate, outputting sound from at least one of the controller 200 and the information processing apparatus 100, and displaying a message on the display of the information processing apparatus 100.

As a result, the information processing apparatus 100 can more easily perform a user operation in a three-dimensional space such as VR or AR.

In addition, the control unit 190 displays the identification information for informing the outside which of VR and AR is being used, on the indicator provided in the information processing apparatus 100 or the controller 200.

As a result, the information processing apparatus 100 can notify the outside that VR is being used, and can improve the safety of the user or the like.

In addition, the control unit 190 executes at least one of the processes including, in a case where an approach to a real object by a predetermined distance occurs during use of VR, displaying an alert in the three-dimensional space, vibrating at least one of the controller 200 and the information processing apparatus 100, and outputting sound from at least one of the controller 200 and the information processing apparatus 100.

As a result, the information processing apparatus 100 can improve the safety of the user or the like who is using VR.

In addition, the control unit 190 changes the form of the display for irradiating the predetermined range in accordance with the display angle of the object disposed at the first position.

As a result, the information processing apparatus 100 can perform an operation corresponding to a real physical phenomenon such as illuminating a target with real illumination, and thus, it is possible to experience excellent operability in the XR display.

In addition, the control unit 190 executes the process of, in a case where the distance between the preset boundary of the virtual reality space, and the surrounding other person or a real object in the real space falls below a predetermined threshold value, notifying the user that the user is approaching the surrounding other person or the real object in the real space.

As a result, the information processing apparatus 100 can realize a usage form in consideration of the safety of the user while providing a display with an immersive feeling.

In addition, the control unit 190 outputs the display for irradiating the predetermined range to the three-dimensional space related to CAD, DCC, or UGC.

As a result, the information processing apparatus 100 can provide the user with a UI having excellent operability in a scene where a precise operation or a complicated operation is required, such as CAD.

In addition, the control unit 190 acquires angle information of the information processing apparatus 100 acquired in conjunction with the body motion of the user, and changes the form of the display or the virtual controller 210 based on the acquired angle information.

As a result, the information processing apparatus 100 can realize the XR display naturally in conjunction with the motion of the hand of the user or the like.

In addition, the control unit 190 executes the process of determining that a part of the virtual controller 210 has virtually come in contact with the object disposed at the first position, and responding to a contact portion in accordance with the determination result.

As a result, the information processing apparatus 100 can realize flexible information processing according to the request of the user, such as executing the process in accordance with a contact operation on a target that is easier to operate when being in direct contact, not limited to the torch.

Hitherto, the preferred embodiment of the present disclosure has been described in detail with reference to the accompanying drawings, but the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

Furthermore, the effects described in the present specification are merely illustrative or exemplary, and are not restrictive. That is, the technology according to the present disclosure can exhibit other effects obvious to those skilled in the art from the description of the present specification together with or instead of the above effects.

Note that the present technology can also have the components as follows.
(1) An information processing apparatus comprising a control unit configured to execute processes including:
   outputting, to a three-dimensional space, a display for irradiating a predetermined range based on a first position pointed by a controller; and
   changing a size of the display in accordance with a distance between the first position on the three-dimensional space and a second position of the controller.
(2) The information processing apparatus according to (1), wherein
   the control unit is configured to execute a process of changing the size of the display in accordance with the distance.
(3) The information processing apparatus according to (2), wherein
   the control unit is configured to execute a process of changing the size of the display to be smaller as the distance becomes shorter.
(4) The information processing apparatus according to (1), wherein the display is circular.
(5) The information processing apparatus according to any one of (1) to (4), wherein
   the control unit is configured to execute a process of changing a degree of at least one of brightness, saturation, shading, and blurring of the display in accordance with the distance.
(6) The information processing apparatus according to any one of (1) to (5), wherein
   the control unit is configured to execute processes including:
   displaying an object for performing a predetermined operation; and
   changing a display of an operation portion of the object to be in an operable state when the operation portion is irradiated by the display and a second distance between the operation portion of the object and the second position becomes equal to or less than a predetermined threshold value.
(7) The information processing apparatus according to (6), wherein
   the control unit is configured to execute a process of changing a display so that the operation portion floats up, when an operation is performed on the operation portion.
(8) The information processing apparatus according to (6), wherein
   the control unit is configured to execute a process of changing a color of the display when an operation is performed on the operation portion.
(9) The information processing apparatus according to (8), wherein
   the control unit is configured to execute a process of bringing the color of the display back when the operation on the operation portion is completed.
(10) The information processing apparatus according to any one of (1) to (9), wherein
   the control unit is configured to execute at least one of processes including, when an operation is performed on the operation portion, vibrating at least one of the controller and the information processing apparatus, outputting sound from at least one of the controller and the information processing apparatus, and displaying a message on a display of the information processing apparatus.
(11) The information processing apparatus according to any one of (6) to (10), wherein
   the control unit is configured to execute at least one of processes including, when the operation on the operation portion is completed, vibrating at least one of the controller and the information processing apparatus, outputting sound from at least one of the controller and the information processing apparatus, and displaying the message on the display of the information processing apparatus.
(12) The information processing apparatus according to any one of (1) to (11), wherein
   the control unit is configured to execute a process of displaying identification information for informing an outside which of virtual reality (VR) and augmented reality (AR) is being used, on an indicator provided in the information processing apparatus or the controller.
(13) The information processing apparatus according to any one of (1) to (12), wherein
   the control unit is configured to execute at least one of processes including, in a case where an approach to a real object by a predetermined distance occurs during use of VR, displaying an alert in the three-dimensional space, vibrating at least one of the controller and the information processing apparatus, and outputting sound from at least one of the controller and the information processing apparatus.
(14) The information processing apparatus according to any one of (1) to (13), wherein
   the control unit is configured to execute a process of changing a form of the display for irradiating the predetermined range in accordance with a display angle of an object disposed at the first position.
(15) The information processing apparatus according to any one of (1) to (14), wherein
   the control unit is configured to execute a process of, in a case where a distance between a preset boundary of a virtual reality space, and a surrounding other person or a real object in a real space falls below a predetermined threshold value, notifying a user that the user is approaching the surrounding other person or the real object in the real space.
(16) The information processing apparatus according to any one of (1) to (15), wherein
   the control unit is configured to execute a process of outputting the display for irradiating the predetermined range to the three-dimensional space related to computer-aided design (CAD), digital contents creation (DCC), or user-generated content (UGC).
(17) The information processing apparatus according to any one of (1) to (16), wherein
   the control unit is configured to execute processes including:
   acquiring angle information of the information processing apparatus, which is acquired in conjunction with a body motion of a user; and
   changing the display or a form of the controller based on the acquired angle information.
(18) The information processing apparatus according to any one of (1) to (17), wherein
   the control unit is configured to execute a process of determining that a part of the controller is in virtual contact with an object disposed at the first position, and responding to a contact portion in accordance with a determination result.
(19) An information processing program causing an information processing apparatus to execute processes including:
   outputting, to a three-dimensional space, a display for irradiating a predetermined range based on a first position pointed by a controller; and
   changing a size of the display in accordance with a distance between the first position on the three-dimensional space and a second position of the controller.
(20) An information processing method comprising, by an information processing apparatus, executing processes including:
   outputting, to a three-dimensional space, a display for irradiating a predetermined range based on a first position pointed by a controller; and
   changing a size of the display in accordance with a distance between the first position on the three-dimensional space and a second position of the controller.

### Reference Signs List

- 100: INFORMATION PROCESSING APPARATUS
- 110: COMMUNICATION UNIT
- 120: STORAGE UNIT
- 130: TRANSMISSION AND RECEPTION UNIT
- 140: OUTPUT UNIT
- 150: CHANGE UNIT
- 160: EXECUTION UNIT
- 190: CONTROL UNIT
- 200: CONTROLLER
- 210: VIRTUAL CONTROLLER
- 310: VIRTUAL OPERATION PANEL
- 320: VIRTUAL OPERATION PANEL
- 1000: COMPUTER
- 1050: BUS
- 1100: CPU
- 1200: RAM
- 1300: ROM
- 1400: HDD
- 1450: PROGRAM DATA
- 1500: COMMUNICATION INTERFACE
- 1550: EXTERNAL NETWORK
- 1600: INPUT AND OUTPUT INTERFACE
- 1650: INPUT AND OUTPUT DEVICE

## Claims

1. An information processing apparatus comprising a control unit configured to execute processes including:
outputting, to a three-dimensional space, a display for irradiating a predetermined range based on a first position pointed by a controller; and
changing a size of the display in accordance with a distance between the first position on the three-dimensional space and a second position of the controller.

2. The information processing apparatus according to claim 1, wherein
the control unit is configured to execute a process of changing the size of the display in accordance with the distance.

3. The information processing apparatus according to claim 2, wherein
the control unit is configured to execute a process of changing the size of the display to be smaller as the distance becomes shorter.

4. The information processing apparatus according to claim 1, wherein the display is circular.

5. The information processing apparatus according to claim 1, wherein
the control unit is configured to execute a process of changing a degree of at least one of brightness, saturation, shading, and blurring of the display in accordance with the distance.

6. The information processing apparatus according to claim 1, wherein
the control unit is configured to execute processes including:
displaying an object for performing a predetermined operation; and
changing a display of an operation portion of the object to be in an operable state when the operation portion is irradiated by the display and a second distance between the operation portion of the object and the second position becomes equal to or less than a predetermined threshold value.

7. The information processing apparatus according to claim 6, wherein
the control unit is configured to execute a process of changing a display so that the operation portion floats up, when an operation is performed on the operation portion.

8. The information processing apparatus according to claim 6, wherein
the control unit is configured to execute a process of changing a color of the display when an operation is performed on the operation portion.

9. The information processing apparatus according to claim 8, wherein
the control unit is configured to execute a process of bringing the color of the display back when the operation on the operation portion is completed.

10. The information processing apparatus according to claim 6, wherein
the control unit is configured to execute at least one of processes including, when an operation is performed on the operation portion, vibrating at least one of the controller and the information processing apparatus, outputting sound from at least one of the controller and the information processing apparatus, and displaying a message on a display of the information processing apparatus.

11. The information processing apparatus according to claim 10, wherein
the control unit is configured to execute at least one of processes including, when the operation on the operation portion is completed, vibrating at least one of the controller and the information processing apparatus, outputting sound from at least one of the controller and the information processing apparatus, and displaying the message on the display of the information processing apparatus.

12. The information processing apparatus according to claim 1, wherein
the control unit is configured to execute a process of displaying identification information for informing an outside which of virtual reality (VR) and augmented reality (AR) is being used, on an indicator provided in the information processing apparatus or the controller.

13. The information processing apparatus according to claim 1, wherein
the control unit is configured to execute at least one of processes including, in a case where an approach to a real object by a predetermined distance occurs during use of VR, displaying an alert in the three-dimensional space, vibrating at least one of the controller and the information processing apparatus, and outputting sound from at least one of the controller and the information processing apparatus.

14. The information processing apparatus according to claim 1, wherein
the control unit is configured to execute a process of changing a form of the display for irradiating the predetermined range in accordance with a display angle of an object disposed at the first position.

15. The information processing apparatus according to claim 1, wherein
the control unit is configured to execute a process of, in a case where a distance between a preset boundary of a virtual reality space, and a surrounding other person or a real object in a real space falls below a predetermined threshold value, notifying a user that the user is approaching the surrounding other person or the real object in the real space.

16. The information processing apparatus according to claim 1, wherein
the control unit is configured to execute a process of outputting the display for irradiating the predetermined range to the three-dimensional space related to computer-aided design (CAD), digital contents creation (DCC), or user-generated content (UGC).

17. The information processing apparatus according to claim 1, wherein
the control unit is configured to execute processes including:
acquiring angle information of the information processing apparatus, which is acquired in conjunction with a body motion of a user; and
changing the display or a form of the controller based on the acquired angle information.

18. The information processing apparatus according to claim 1, wherein
the control unit is configured to execute a process of determining that a part of the controller is in virtual contact with an object disposed at the first position, and responding to a contact portion in accordance with a determination result.

19. An information processing program causing an information processing apparatus to execute processes including:
outputting, to a three-dimensional space, a display for irradiating a predetermined range based on a first position pointed by a controller; and
changing a size of the display in accordance with a distance between the first position on the three-dimensional space and a second position of the controller.

20. An information processing method comprising, by an information processing apparatus, executing processes including:
outputting, to a three-dimensional space, a display for irradiating a predetermined range based on a first position pointed by a controller; and
changing a size of the display in accordance with a distance between the first position on the three-dimensional space and a second position of the controller.
